# FASCICULE DE BREVET EUROPEEN

(11) **EP 2 281 164 B1**
(45) Date de publication et mention de la délivrance du brevet: **18.09.2013**
(21) Numéro de dépôt: 09769455.8
(22) Date de dépôt: 02.06.2009
(51) Int. Cl.: F27B 7/20, F27D 17/00, C04B 7/47

(54) **PROCÉDÉ DE FABRICATION DE CLINKER DE CIMENT ET INSTALLATION DE FABRICATION DE CLINKER DE CIMENT.**
VERFAHREN ZUR HERSTELLUNG VON ZEMENTKLINKERN UND ANLAGE ZUR HERSTELLUNG VON ZEMENTKLINKERN
METHOD FOR MANUFACTURING A CEMENT CLINKER, AND CEMENT CLINKER MANUFACTURING FACILITY

(30) Priorité: 03.06.2008 FR 0803050
(43) Date de publication de la demande: 09.02.2011
(73) Titulaire: Fives FCB, 59650 Villeneuve d'Ascq (FR)
(72) Inventeur: DEVROE, Sébastien, 59777 Lille (FR); METIVIER, Simon, F-59000 Lille (FR)
(74) Mandataire: Boubal, Denis Henri Jacques
(86) Numéro de dépôt international: PCT/FR2009/000636
(87) Numéro de publication internationale: WO 2009/156614

(56) Documents cités:
- EP-A- 0 045 811

## Description

L'invention concerne un procédé de fabrication de clinker de ciment dans une installation ainsi qu'une installation de fabrication de clinker de ciment en tant que telle.

La fabrication de clinker de ciment utilise le plus souvent un procédé de cuisson dit en voie sèche, où les matières premières préalablement broyées sont calcinées dans un four rotatif. Afin de diminuer les besoins énergétiques de l'opération, des échangeurs ont été ajoutés en amont et en aval du four rotatif et récupèrent directement la chaleur contenue dans les matières et les fumées sortant du four. Ainsi, alors que les produits sortant du four ont une température supérieure à 1.000 °C, les flux de gaz chauds, air ou fumées, qui sortent de ces échangeurs, sans être utilisés pour l'opération de cuisson, bien souvent, ne sont plus qu'à des températures inférieures à 350 °C. Toutefois, ces gaz contiennent encore une quantité de chaleur qui peut représenter 20 à 30 % de l'énergie introduite sous forme de combustible dans l'installation.

Les gaz chauds sont généralement utilisés pour le séchage des matières premières qui servent à la fabrication du clinker. Toutefois, seulement une partie de la chaleur est nécessaire pour les opérations de séchage sauf cas très rare où l'humidité des matières est très élevée. Une partie des gaz chauds non utilisés constitue ainsi une énergie disponible.

La récupération de chaleur perdue à fin de production d'électricité est alors connue et pratiquée dans de nombreuses usines. Le procédé le plus courant consiste à diriger les gaz chauds vers des échangeurs constitués de tubes dans lesquels circule de l'eau que la chaleur transforme en vapeur sous pression utilisée pour mouvoir les turbines d'un générateur d'électricité. Compte tenu de la température modérée des gaz dans les échangeurs, le rendement global de conversion de l'énergie en électricité est faible.

Afin d'améliorer la performance des échangeurs, on connaît de remplacer l'eau par du pentane, par exemple. Malgré cette amélioration, le rendement ne dépasse pas 17 % ce qui est nettement inférieur au rendement d'une centrale thermique classique de production d'électricité.

Pour améliorer sensiblement le rendement de récupération, il est alors connu une méthode dite de co-génération qui consiste à augmenter la température de travail grâce à un apport supplémentaire de combustible. Ainsi, par exemple, non seulement on augmente la quantité d'énergie récupérée, mais on améliore également le rendement de conversion grâce à l'élévation de température.

Comme la plupart les installations de cimenterie utilisent des combustibles solides tels que du charbon, de la coke de pétrole, il est nécessaire de disposer d'un volume de combustion important pour assurer la combustion optimale du surplus de combustible et ainsi de disposer d'une chambre de combustion dimensionnée à cet effet, suffisamment grande. L'utilisation d'une telle chambre de combustion nécessite de plus d'en évacuer les cendres, et présente également l'inconvénient de produire plus de gaz NOx.

On connaît par exemple des documents EP-0.492.133 et CN 1601214 de telles installations de cimenterie dans lesquelles on récupère de l'énergie de combustion afin de produire de l'électricité.

On connaît du document EP-0.045.811 un procédé de récupération des gaz d'échappement d'une chaudière d'un dispositif générateur de puissance électrique utilisant un matériau combustible tel qu'un fuel. Ce document traite plus particulièrement du traitement des gaz d'échappement qui est réalisé dans une section de préchauffage d'une installation de fabrication de clinker de ciment.

De l'air chaud généré par le refroidisseur à clinker de l'installation est envoyé par un conduit jusqu'à ladite chaudière pour être utilisé comme gaz de combustion. Le matériau combustible est introduit dans le conduit dans une région adjacente à l'entrée dans la chaudière, notamment sous la forme de charbon pulvérisé.

Le but de la présente invention est de pallier les inconvénients précités en proposant un procédé de fabrication de clinker de ciment dans une installation, ainsi qu'une installation de fabrication de clinker de ciment en tant que telle, permettant d'augmenter les rendements de récupération d'énergie en minimisant l'apport de combustible nécessaire à la cogénération.

D'autres buts et avantages apparaîtront au cours de la description qui va suivre qui n'est donnée qu'à titre indicatif et qui n'a pas pour but de la limiter.

L'invention concerne tout d'abord un procédé de fabrication de clinker de ciment dans une installation comprenant :
- un four rotatif,
- un préchauffeur à cyclones qui reçoit les fumées dudit four rotatif,
- un refroidisseur à clinker, au niveau de la sortie dudit four rotatif,
- au moins un échangeur appelé premier échangeur,
et dans lequel procédé :
- on préchauffe les matières crues et on les décarbonate dans ledit préchauffeur à cyclones,
- on refroidit le clinker sortant du four dans ledit refroidisseur à clinker, par soufflage d'air, engendrant de l'air chaud,
- on dirige une première partie de l'air chaud engendré dans ledit refroidisseur à clinker, dit air secondaire, vers le four rotatif pour être utilisée comme air de combustion,
- on dirige une seconde partie de l'air chaud engendré dans ledit refroidisseur à clinker, dit air tertiaire, définie par une température au moins égale à 750 °C, et on la conduit séparément de la première partie jusqu'à un endroit de l'installation où du combustible est brûlé pour être utilisée comme air de combustion, soit, selon une première alternative, à un ou plusieurs réacteur(s) de précalcination, équipé(s) chacun d'un ou plusieurs brûleur(s), relié(s) à la partie basse dudit préchauffeur à cyclones, soit, selon une seconde alternative, au brûleur dudit four rotatif,
- on dirige et on conduit une troisième partie d'air chaud, engendré dans ledit refroidisseur à clinker, dit air excédentaire, dans au moins un premier échangeur dans le but de récupérer de l'énergie pour produire de l'électricité,
- on prévoit un deuxième échangeur qui coopère avec l'air tertiaire de manière à chauffer un fluide récepteur d'un circuit de fluide commun audit premier échangeur et audit deuxième échangeur, ledit deuxième échangeur prélevant de l'énergie de l'air tertiaire, diminuant la température de l'air tertiaire d'amont en aval dudit deuxième échangeur, l'air tertiaire étant utilisé comme air de combustion en aval dudit deuxième échangeur, l'air d'exhaure dudit deuxième échangeur étant dirigé, soit au(x)dit(s) réacteur(s) de précalcination, selon ladite première alternative, soit audit brûleur dudit four rotatif, selon ladite seconde alternative, la chaleur transmise par le second échangeur au fluide récepteur correspondant à ladite chaleur prélevée sur l'air tertiaire, engendrée par ledit refroidisseur de clinker.

Selon une variante de réalisation, ledit fluide du circuit de fluide est de l'eau sous forme vapeur ou liquide, le premier échangeur étant un générateur de vapeur, ledit deuxième échangeur un surchauffeur de vapeur.

L'invention concerne également une installation pour la fabrication de clinker de ciment, convenant pour la mise en oeuvre du procédé, comprenant :
- un four rotatif,
- un préchauffeur à cyclones qui reçoit les fumées dudit four rotatif,
- un refroidisseur à clinker dans lequel le clinker est refroidi par soufflage d'air, prévu au niveau de la sortie dudit four rotatif, engendrant de l'air chaud, une première partie de l'air chaud ainsi engendré par ledit refroidisseur à clinker, dit air secondaire, étant utilisée par le four comme air de combustion,
- une conduite qui achemine une deuxième partie de l'air chaud engendré par ledit refroidisseur à clinker, dit air tertiaire, jusqu'à une zone de combustion de l'installation, soit à un ou un plusieurs réacteur(s) de précalcination, équipé(s) chacun d'un ou plusieurs brûleur(s), relié(s) à la partie basse dudit préchauffeur à cyclones, selon une première alternative, soit au brûleur dudit four rotatif selon une seconde alternative,
- une conduite qui achemine une troisième partie de l'air chaud engendré par ledit refroidisseur à clinker, dit air excédentaire, jusqu'à un échangeur d'un générateur de production d'électricité, appelé premier échangeur et dans laquelle la conduite qui achemine l'air tertiaire coopère avec un deuxième échangeur, en amont de ladite zone de combustion, un circuit de fluide étant commun audit premier échangeur et audit deuxième échangeur, l'air d'exhaure dudit deuxième échangeur étant utilisé comme air de combustion soit au(x)dit(s) réacteur(s) de précalcination, selon ladite première alternative, soit au brûleur dudit four rotatif, selon ladite seconde alternative.

L'invention sera mieux comprise à la lecture de la description suivante, accompagnée des dessins en annexe parmi lesquels :
- la figure 1 est une vue schématique du procédé conforme à l'invention mis en oeuvre dans une installation de fabrication de clinker de ciment, selon un mode de réalisation,
- la figure 2 est une vue schématique d'un procédé conforme à l'invention, selon un second mode de réalisation, dans une installation de fabrication de clinker de ciment,
- la figure 3 est une vue schématique d'un procédé conforme à l'invention selon un troisième mode de réalisation, dans une installation de fabrication de clinker de ciment,
- la figure 4 est une vue de détail illustrant le premier et le deuxième échangeurs ainsi que le circuit de fluide commun à ces derniers.

L'invention concerne un procédé de fabrication de clinker de ciment dans une installation comprenant :
- un four rotatif 1,
- un préchauffeur 2 qui reçoit les fumées dudit four rotatif,
- un refroidisseur à clinker 4, dans lequel refroidisseur le clinker est refroidi par soufflage d'air, au niveau de la sortie dudit four rotatif 1, engendrant de l'air chaud,
- au moins un échangeur 9 appelé premier échangeur,
   et dans lequel procédé :
- on préchauffe les matières crues et on les décarbonate dans ledit préchauffeur à cyclones 2,
- on refroidit le clinker sortant du four dans ledit refroidisseur à clinker 4,
- on dirige une première partie 5 de l'air chaud engendré dans ledit refroidisseur à clinker, dit air secondaire, vers le four rotatif pour être utilisée comme air de combustion,
- on dirige une seconde partie 6 de l'air chaud engendré dans ledit refroidisseur à clinker, dit air tertiaire, définie par une température au moins égale à 750 °C, et on la conduit séparément de la première partie jusqu'à un endroit de l'installation où du combustible est brûlé pour être utilisée comme air de combustion,
- on dirige et on conduit une troisième partie 7 de l'air chaud engendré dans ledit refroidisseur à clinker, dit air excédentaire dans au moins un premier échangeur 9 dans le but de récupérer de l'énergie pour produire de l'électricité.

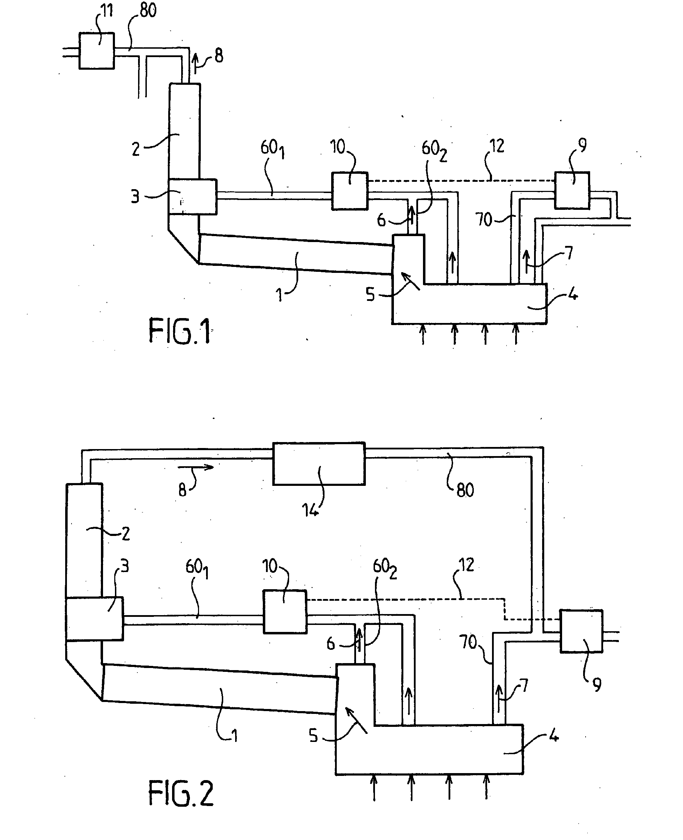

Selon des variantes de réalisation illustrées notamment à la figure 1 et à la figure 2, et tel que connu dans l'état de l'art, ledit air tertiaire 6 notamment de température supérieure ou au moins égale à 750 °C, est conduit par une conduite 60 jusqu'à un ou plusieurs réacteurs de précalcination 3 reliés à la partie basse dudit préchauffeur 2 à cyclones. Ces précalcinateurs sont équipés chacun d'un ou plusieurs brûleurs.

Selon l'invention, on prévoit un deuxième échangeur 10 qui coopère avec l'air tertiaire 6 de sorte à chauffer un fluide récepteur d'un circuit de fluide 12 commun audit premier échangeur 9 et audit deuxième échangeur 10.

L'invention repose sur le fait d'augmenter le rendement de récupération d'énergie en ajoutant, à l'installation, outre le premier échangeur 9 placé sur le trajet de l'air excédentaire 7 et dont la température est de l'ordre de 250 à 300 °C, un second échangeur 10 qui va fonctionner à haute température, et notamment à des températures supérieures à 750 °C.

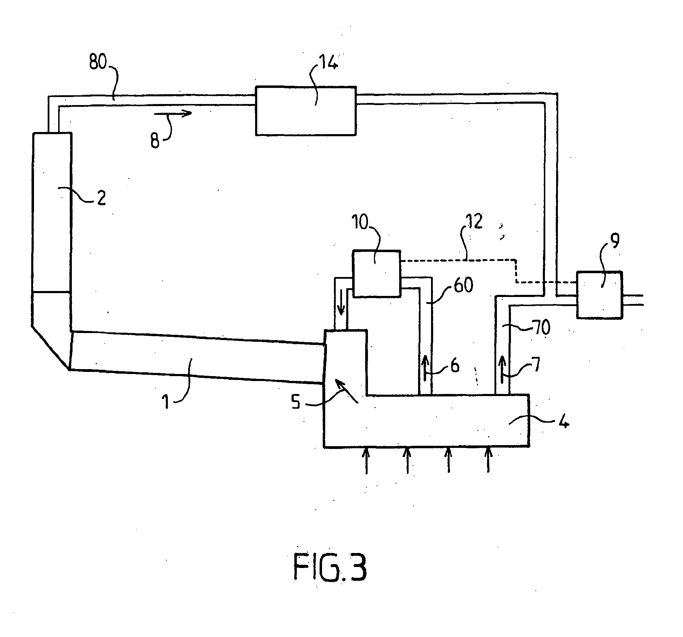

Ce second échangeur 10 prélève de l'énergie à l'air tertiaire 6 qui est acheminée soit au brûleur du précalcinateur 3 (e.g. figures 1 ou 2), soit au brûleur du four 1 (e.g. figure 3) et diminue donc la température de l'air dans des proportions qui ne lui font pas perdre ses propriétés d'air de combustion, et donc sa qualité d'air tertiaire. Ainsi, la perte de température, de l'aval en amont dudit second échangeur 10 peut être de l'ordre de 100 à 150 °C. La température de l'air de combustion, à savoir de l'air tertiaire 6 en aval du deuxième échangeur 10 peut être au moins égale à 650 °C.

Selon un mode de réalisation, le fluide du circuit de fluide 12 est de l'eau sous forme vapeur ou liquide, le premier échangeur 9 étant un générateur de vapeur, le deuxième échangeur 10 étant un surchauffeur de vapeur.

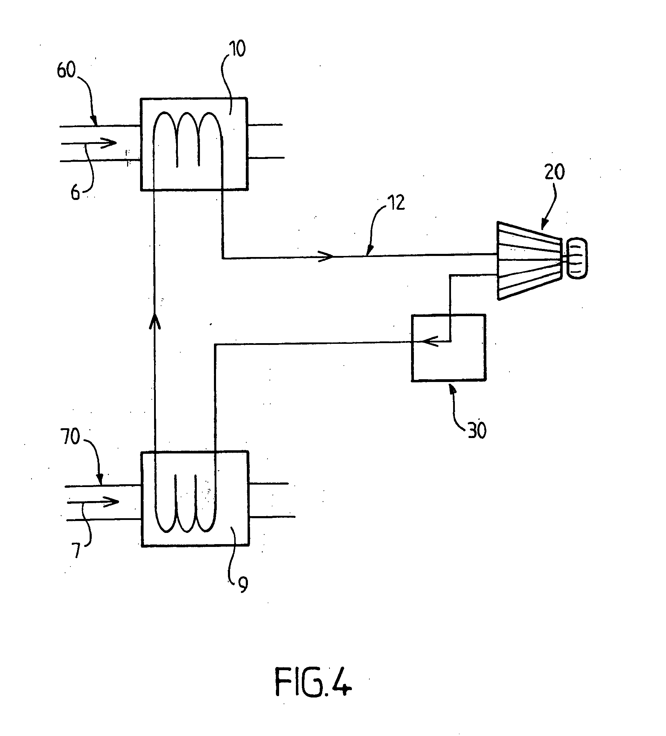

En se rapportant à l'exemple de la figure 4 notamment, le fluide du circuit de fluide 12, notamment sous forme de vapeur haute pression permet d'entraîner une turbine 20 et son alternateur. Par exemple, l'air excédentaire 7 est à une température d'environ 250 °C et traverse le premier échangeur 9 qui est un générateur de vapeur. La vapeur ainsi générée poursuit son chemin dans le circuit jusqu'au second échangeur 10, qui est un surchauffeur de vapeur traversé par l'air tertiaire 6, par exemple à une température de 750 °C en amont du surchauffeur. En aval du surchauffeur, la vapeur d'eau est à haute pression (par exemple à 350 bars) et permet d'entraîner une turbine et son alternateur. En aval de la turbine, et en amont du générateur de vapeur, un condenseur 30 permet d'abaisser la pression.

Selon un mode de réalisation, on prévoit un troisième échangeur 11 pour la récupération d'énergie et on conduit au moins en partie les fumées 8 sortant du préchauffeur à cyclones de sorte à coopérer avec ledit troisième échangeur 11.

Notamment, selon un exemple de réalisation, les fumées 8 du préchauffeur à cyclones coopèrent avec le troisième échangeur 11 de sorte à chauffer un fluide d'un circuit de fluide. Ce circuit de fluide peut être commun ou non audit circuit de fluide 12 commun entre ledit premier échangeur 9 et ledit deuxième échangeur 10.

En se rapportant à la figure 3, selon un autre mode de réalisation du procédé, on mélange l'air chaud excédentaire 7 du refroidisseur à clinker 4 aux fumées 8 du préchauffeur à cyclones 2, en amont dudit premier échangeur 9 permettant d'apporter à l'échangeur une plus grande quantité d'énergie thermique.

Eventuellement, notamment dans le cas de matières premières humides, on peut utiliser au moins partiellement les fumées 8 du préchauffeur à cyclones 2 pour le séchage de la matière première de production de clinker dans une unité 14, avant d'être mélangées à l'air excédentaire 7 du refroidisseur.

L'invention concerne également une installation pour la fabrication de clinker de ciment comprenant :
- un four rotatif 1,
- un préchauffeur à cyclones 2 qui reçoit les fumées dudit four rotatif,
- un refroidisseur à clinker 4 dans lequel le clinker est refroidi par soufflage d'air, prévu au niveau de la sortie dudit four rotatif 1 engendrant de l'air chaud, une première partie 5 de l'air chaud ainsi engendré par le refroidisseur à clinker 4, dit air secondaire, étant utilisée par le four comme air de combustion,
- une conduite 60 ; 60₁ ; 60₂ qui achemine une deuxième partie 6 de l'air chaud engendré par ledit refroidisseur à clinker, dit tertiaire, jusqu'à une zone de combustion de l'installation,
- une conduite 70 qui achemine une troisième partie 7 de l'air chaud engendré par ledit refroidisseur à clinker 4, dit air excédentaire, jusqu'à un échangeur 9 d'un générateur de production d'électricité, appelé premier échangeur.

Notamment telle qu'illustrée aux figures 1 et 2, la conduite 70, dite air tertiaire, achemine l'air jusqu'à un ou plusieurs réacteurs de précalcination 3 reliés à la partie basse dudit préchauffeur à cyclones, équipés chacun d'un ou plusieurs brûleurs.

Selon un autre mode de réalisation illustré à la figure 3, la conduite 60 d'air tertiaire achemine l'air jusqu'au brûleur du four rotatif 1.

Selon l'installation conforme à l'invention, la conduite 60₁, 60₂ qui achemine l'air tertiaire 6 coopère avec un deuxième échangeur 10, un circuit de fluide 12 étant commun audit premier échangeur 9 et audit deuxième échangeur 10. Cette installation permettra notamment la mise en oeuvre du procédé conforme à l'invention.

Selon un mode de réalisation de l'installation, le premier échangeur 9 est un générateur de vapeur, le deuxième échangeur 10 est un surchauffeur de vapeur, qui peuvent permettre, tel qu'illustré selon l'exemple de la figure 4, de générer une vapeur d'eau haute pression pour actionner une turbine 20 et son alternateur.

Telle qu'illustrée selon l'exemple de la figure 1, l'installation peut présenter un troisième échangeur 11. Au moins une partie des fumées 8 sortant du préchauffeur 2 coopère avec ledit troisième échangeur 11 pour la récupération d'énergie. Selon une alternative, un circuit de fluide traverse le troisième échangeur 11. Ce circuit de fluide peut être commun ou non avec ledit circuit de fluide 12 commun audit premier échangeur 9 et audit second échangeur 10.

Selon l'exemple de la figure 2, une conduite 80 d'évacuation des fumées du préchauffeur de cyclones rejoint la conduite de l'air excédentaire 7, en amont du premier échangeur 9. Cette conduite 80 d'évacuation des fumées 8 du préchauffeur à cyclones 2 peut éventuellement coopérer avec une unité 14 de séchage de matière première, en amont de la jonction avec ladite conduite 70 d'air excédentaire 7.

Nous décrivons maintenant quatre exemples d'installation. Le premier exemple d'installation est une installation de l'état de l'art. Les exemples 2, 3 et 4 sont différentes variantes de l'installation de fabrication de clinker selon l'invention.

### EXEMPLE 1 : (ETAT DE L'ART) :

L'installation considérée, telle que connue de l'état de l'art, est une unité de production de clinker de taille moyenne, ou représentative de la capacité d'un grand nombre d'unités existantes, et qui produit 5.000 tonnes par jour de clinker. Une telle installation consomme 3.000 kJ par kg de clinker produit, apportés sous forme de combustible dont 62,8 % sont introduits au niveau de précalcinateur. Ainsi, la puissance générée par le ou les combustibles dans le précalcinateur est de 108,8 MW.

Le refroidisseur à clinker produit, entre autres, 117.000 Nm³/h d'air tertiaire à 890 °C, qui alimente la combustion du réacteur de précalcination, et 210.000 Nm³/h d'air d'exhaure à 245 °C. Les fumées du préchauffeur à cyclones ont un débit de 286.200 Nm³/h et une température de 320 °C.

Un échangeur situé sur le trajet de l'air d'exhaure du refroidisseur abaisse la température des gaz de 245 °C à 135 °C, et échange une puissance de 8,6 MW. Compte tenu de la température faible à laquelle peut être porté le fluide de l'échangeur, le rendement de conversion en électricité ne dépasse pas 15 %, à condition d'utiliser un fluide adapté à cette basse température. On peut ainsi produire 1,29 MW d'électricité.

On considère le cas dans lequel 50 % de l'énergie des fumées est nécessaire au séchage des matières premières. Un échangeur situé sur le trajet des fumées du préchauffeur et qui en traite les 50 % restants abaisse la température des gaz de 320 °C à 135 °C, et échange une puissance de 11,5 MW. Compte tenu de la température modérée à laquelle peut être porté le fluide de l'échangeur, le rendement de conversion en électricité ne dépasse pas 15 %, et on peut ainsi produire 1,73 MW d'énergie électrique au maximum.

La somme des productions maximales d'électricité est de 3,02 MW.

### EXEMPLE 2 :

On considère l'installation, selon l'invention, de l'exemple 1, dans laquelle un échangeur est placé sur le trajet de l'air tertiaire, et en abaisse la température jusqu'à 700 °C. La quantité de combustible introduite dans le réacteur de précalcination doit augmenter, et les nouvelles conditions de fonctionnement de l'installation sont décrites ci-après.

La puissance générée par le combustible dans le précalcinateur est de 117,8 MW. Le refroidisseur à clinker produit maintenant 127.900 Nm³/h d'air tertiaire à 860 °C, et 199.200 Nm³/h d'air d'exhaure à 235 °C (air excédentaire). Les fumées du préchauffeur à cyclones ont un débit de 300.000 Nm³/h et une température de 335 °C.

L'échangeur situé sur le trajet de l'air tertiaire, (deuxième échangeur) et qui en réduit la température de 860 °C à 700 °C, échange une puissance de 8,3 MW. L'échangeur (premier échangeur) situé sur le trajet de l'air d'exhaure (air excédentaire) du refroidisseur abaisse la température des gaz de 235 °C à 135 °C, et échange une puissance de 7,4 MW. Les deux échangeurs sont reliés de sorte que le second ait un rôle de préchauffeur du fluide. La température maximale élevée permet d'atteindre un rendement de conversion de 28 % sur un total de 15,7 MW, soit 4,40 MW.

En comparaison à la récupération d'énergie sur le seul flux d'air d'exhaure du refroidisseur, présentée à l'exemple 1, on a augmenté la production de 3,11 MW et le rendement marginal de l'énergie supplémentaire apportée en combustible, soit 9 MW, atteint 34,5 %.

### EXEMPLE 3 :

On considère l'installation, selon l'invention, de l'exemple 2, dans laquelle 50 % des fumées du préchauffeur à cyclones sont utilisés pour le séchage des matières premières.

Le flux de fumées du préchauffeur est divisé en deux. Un premier flux qui ne sert pas au séchage de matières, soit 150.000 Nm³/h qui est conduit à travers un échangeur (troisième échangeur) et qui abaisse les gaz de 335 °C à 135 °C et échange 13,1 MW. L'échangeur est relié aux deux autres (premier échangeur et second échangeur) et on dispose ainsi d'un total de 28,8 MW. Le rendement de conversion atteint 28 % et on produit 8,06 MW d'énergie électrique.

En comparaison avec l'exemple 1, où l'énergie récupérable est de 3,02 MW, le rendement marginal de l'énergie supplémentaire apportée en combustible, soit 9 MW, atteint 56 %. Cette valeur est équivalente au rendement d'une centrale thermique moderne utilisant du combustible solide.

### EXEMPLE 4 :

On considère l'installation, selon l'invention, de l'exemple 2, dans laquelle 50 % des fumées du préchauffeur à cyclones sont utilisés pour le séchage des matières premières, et donnent naissance à un débit de 182.000 Nm³/h à 105 °C.

Cette fois, la totalité des fumées du préchauffeur est mélangée, en aval de l'unité de séchage, à l'air d'exhaure du refroidisseur (air excédentaire). On dispose alors d'un débit de 531.200 Nm³/h à 218 °C. Ce fluide est conduit à travers un échangeur (premier échangeur) qui abaisse la température des gaz de 218 °C à 135 °C et échange 17,5 MW.

L'échangeur (premier échangeur) est relié à l'échangeur de l'air tertiaire (second échangeur) et on dispose ainsi d'un total de 25,8 MW. Le rendement de conversion atteint 28 % et on produit 7,22 MW d'énergie électrique.

En comparaison avec l'exemple 1 où l'énergie récupérable est de 3,02 MW, le rendement marginal de l'énergie supplémentaire apportée en combustible, soit 9 MW, atteint 46,6 %. Cette valeur est équivalente au rendement d'une centrale thermique moderne fonctionnant au combustible solide.

Naturellement, d'autres modes de réalisation auraient pu être envisagés par l'homme du métier sans pour autant sortir du cadre de l'invention définie par les revendications ci-après.

## Revendications

1. Procédé de fabrication de clinker de ciment dans une installation comprenant :
- un four rotatif (1),
- un préchauffeur à cyclones (2) qui reçoit les fumées dudit four rotatif,
- un refroidisseur à clinker (4), au niveau de la sortie dudit four rotatif (1),
- au moins un échangeur (9), appelé premier échangeur,
et dans lequel procédé :
- on préchauffe les matières crues et on les décarbonate dans ledit préchauffeur à cyclones (2)
- on refroidit le clinker sortant du four dans ledit refroidisseur à clinker (4), par soufflage d'air, engendrant de l'air chaud,
- on dirige une première partie (5) de l'air chaud engendré dans ledit refroidisseur à clinker, dit air secondaire, vers le four rotatif (1) pour être utilisé comme air de combustion,
- on dirige une seconde partie (6) de l'air chaud engendré dans ledit refroidisseur à clinker, dit air tertiaire, définie par une température au moins égale à 750°C, et on la conduit séparément de la première partie jusqu'à un endroit de l'installation où du combustible est brûlé pour être utilisée comme air de combustion, soit, selon une première alternative, à un ou plusieurs réacteur(s) de précalcination (3), équipé(s) chacun d'un ou plusieurs brûleur(s), relié(s) à la partie basse dudit préchauffeur à cyclones (2), soit, selon une seconde alternative, au brûleur dudit four rotatif (1),
- on dirige et on conduit une troisième partie (7) d'air chaud engendré dans ledit refroidisseur à clinker, dit air excédentaire, dans au moins ledit premier échangeur (9) dans le but de récupérer de l'énergie pour produire de l'électricité,
- on prévoit un deuxième échangeur (10) qui coopère avec l'air tertiaire (6) de manière à chauffer un fluide récepteur d'un circuit de fluide (12) commun audit premier échangeur (9) et audit deuxième échangeur (10), ledit deuxième échangeur (10) prélevant de l'énergie de l'air tertiaire, diminuant la température de l'air tertiaire d'amont en aval dudit deuxième échangeur (10), l'air tertiaire étant utilisé comme air de combustion en aval dudit deuxième échangeur (10), l'air d'exhaure dudit deuxième échangeur (10) étant dirigé, soit au(x)dit(s) réacteur(s) de précalcination (3), selon ladite première alternative, soit audit brûleur dudit four rotatif, selon ladite seconde alternative, la chaleur transmise par le second échangeur au fluide récepteur correspondant à la chaleur prélevée sur l'air tertiaire, engendrée par ledit refroidisseur à clinker.

2. Procédé selon la revendication 1, dans lequel ledit fluide du circuit de fluide (12) est de l'eau sous forme vapeur ou liquide, ledit premier échangeur (9) étant un générateur de vapeur, ledit deuxième échangeur (10) étant un surchauffeur de vapeur.

3. Procédé selon la revendication 1 ou 2, dans lequel l'installation comprend ledit un ou plusieurs réacteur(s) de précalcination (3), et dans lequel on conduit l'air tertiaire (6) jusqu'au(x)dit(s) réacteurs de précalcination.

4. Procédé selon l'une des revendications 1 à 3, dans lequel on prévoit un troisième échangeur (11) pour la récupération d'énergie, et on conduit au moins en partie les fumées (8) sortant du préchauffeur à cyclones (2) de manière à coopérer avec ledit troisième échangeur (11).

5. Procédé selon la revendication 4, dans lequel les fumées (8) du préchauffeur à cyclones (2) coopèrent avec le troisième échangeur (11) de sorte à chauffer un fluide d'un circuit de fluide commun ou non audit circuit de fluide (12) commun entre ledit premier échangeur (9) et ledit deuxième échangeur (10).

6. Procédé selon l'une des revendications 1 à 3, dans lequel on mélange l'air chaud excédentaire (7) du refroidisseur à clinker (4) aux fumées (8) du préchauffeur à cyclones (2), en amont dudit premier échangeur (9).

7. Procédé selon la revendication 6, dans lequel on utilise au moins partiellement les fumées (8) du préchauffeur à cyclones (2) pour le séchage de la matière première de production de clinker dans une unité (14), avant d'être mélangées à l'air excédentaire (7) du refroidisseur.

8. Procédé selon l'une des revendications 1 à 7, dans lequel la température de l'air de combustion, à savoir l'air tertiaire (6), en aval dudit deuxième échangeur (10) est au moins égale à 650°C.

9. Installation pour la fabrication de clinker de ciment convenant pour la mise en oeuvre du procédé selon la revendication 1, comprenant :
- un four rotatif (1),
- un préchauffeur à cyclones (2) qui reçoit les fumées dudit four rotatif,
- un refroidisseur à clinker (4) dans lequel le clinker est refroidi par soufflage d'air, prévu au niveau de la sortie dudit four rotatif (1), engendrant de l'air chaud, une première partie (5) de l'air chaud ainsi engendré par le refroidisseur à clinker (4), dit air secondaire, étant utilisée par le four comme air de combustion,
- une conduite (60 ; 60₁ ; 60₂) qui achemine une deuxième partie (6) de l'air chaud engendré par ledit refroidisseur à clinker (4), dit air tertiaire, jusqu'à une zone de combustion de l'installation, soit, selon une première alternative, à un ou plusieurs réacteur(s) de précalcination (3) équipé(s) chacun d'un ou plusieurs brûleurs, relié(s) à la partie base dudit préchauffeur à cyclones (2), soit, selon une seconde alternative, au brûleur dudit four rotatif (1)
- une conduite (70) qui achemine une troisième partie (7) de l'air chaud engendré par ledit refroidisseur à clinker (4), dit air excédentaire, jusqu'à un échangeur (9) d'un générateur de production d'électricité, appelé premier échangeur,
et dans laquelle la conduite (60) qui achemine l'air tertiaire (6) coopère avec un deuxième échangeur (10), en amont de ladite zone de combustion, un circuit de fluide (12) étant commun audit premier échangeur (9) et audit deuxième échangeur (10), l'air d'exhaure dudit deuxième échangeur étant utilisé comme air de combustion, soit au(x)dit(s) réacteur(s) de précalcination (3), selon ladite première alternative, soit au brûleur dudit four rotatif, selon ladite seconde alternative.

10. Installation selon la revendication 9, comprenant ledit un ou plusieurs réacteur(s) de précalcination (3), la conduite d'air tertiaire (6) acheminant l'air jusqu'au(x)dits réacteurs de précalcination.

11. Installation selon la revendication 9 ou 10, dans laquelle ledit premier échangeur (9) est un générateur de vapeur, ledit deuxième échangeur (10) est un surchauffeur de vapeur.

12. Installation selon l'une des revendications 9 à 11, présentant un troisième échangeur (11) et dans laquelle au moins une partie des fumées (8) sortant du préchauffeur à cyclones (2) coopère avec ledit troisième échangeur (11) pour la récupération d'énergie.

13. Installation selon la revendication 12 dans laquelle un circuit de fluide traverse ledit troisième échangeur (11), ledit circuit étant identique ou non avec ledit circuit de fluide (12) commun audit premier échangeur (9) et audit second échangeur (10)

14. Installation selon l'une des revendications 9 à 11, dans laquelle une conduite (80) d'évacuation des fumées (8) du préchauffeur à cyclones (2) rejoint la conduite de l'air excédentaire (7), en amont du premier échangeur (9).

15. Installation selon la revendication 14, dans laquelle la conduite (80) d'évacuation des fumées (8) du préchauffeur à cyclones (2) coopère avec une unité (14) de séchage de matières premières, en amont de la jonction avec ladite conduite (70) d'air excédentaire (7).

## Patentansprüche

1. Verfahren zur Herstellung von Zementklinker in einer Anlage, umfassend:
- einen Drehrohrofen (1),
- einen Zyklonvorwärmer (2), der die Rauchgase des Drehrohrofens aufnimmt,
- einen Klinkerkühler (4) auf der Ebene des Ausgangs des Drehrohrofens (1),
- mindestens einen Tauscher (9), genannt erster Tauscher, und in welchem Prozess:
- die Rohmaterialien vorerwärmt werden und ihnen in dem Zyklonvorwärmer (2) Kohlensäure entzogen wird,
- der Klinker, der den Ofen verlässt, im Klinkerkühler (4) durch Beblasen mit Luft abgekühlt wird, wobei heiße Luft erzeugt wird,
- ein erster Teil (5) der heißen Luft, erzeugt im Klinkerkühler, genannt sekundäre Luft, hin zum Drehrohrofen (1) geleitet wird, um als Verbrennungsluft verwendet zu werden,
- ein zweiter Teil (6) der heißen Luft, erzeugt im Klinkerkühler, genannt tertiäre Luft, definiert durch eine Temperatur von mindestens gleich 750 °C, geleitet wird, und sie getrennt vom ersten Teil bis zu einer Stelle der Anlage führt, an der Treibstoff verbrannt wird, um als Verbrennungsluft verwendet zu werden, entweder gemäß einer ersten Alternative, an einen oder an mehrere Vorkalzinierungsreaktor(en) (3) jeweils ausgestattet mit einem oder mit mehreren Brenner(n),verbunden an den unteren Teil des Zyklonvorwärmers (2), oder gemäß einer zweiten Alternative, an den dem Brenner des Drehrohrofens (1),
- ein dritter Teil (7) der heißen Luft, erzeugt im Klinkerkühler, genannt überschüssige Luft, in mindestens den ersten Tauscher (9) geleitet und geführt wird, mit dem Ziel, Energie wiederzugewinnen, um Elektrizität zu erzeugen,
- ein zweiter Tauscher (10) vorgesehen ist, der mit der tertiären Luft (6) derart zusammenarbeitet, um ein Aufnahmefluid eines Fluidkreislaufs (12) zu erwärmen, das dem ersten Tauscher (9) und dem zweiten Tauscher (10) gemeinsam ist, wobei der zweite Tauscher (10) Energie aus der tertiären Luft entnimmt, und die Temperatur der tertiären Luft von der vorgelagerten Position zur nachgelagerten Position des zweiten Tauschers (10) vermindert, wobei die tertiäre Luft als Verbrennungsluft nachgelagert vom zweiten Tauscher (10) verwendet wird, wobei die Abluft des zweiten Tauschers (10) gemäß der ersten Alternative entweder auf den/die Vorkalzinierungsreaktor(en) (3) oder, gemäß der zweiten Alternative, auf den Brenner des Drehrohrofens gerichtet ist, wobei die Wärme, die vom zweiten Tauscher auf an das Aufnahmefluid übertragen wird, der Wärme entspricht, die aus der tertiären Luft entnommen wurde, erzeugt vom Klinkerkühler.

2. Verfahren nach Anspruch 1, wobei das Fluid des Fluidkreislaufs (12) dampfförmiges oder flüssiges Wasser ist, wobei der erste Tauscher (9) ein Dampfgenerator ist, wobei der zweite Tauscher (10) ein Dampfüberhitzer ist.

3. Verfahren nach Anspruch 1 oder 2, wobei die Anlage den einen oder die mehreren Vorkalzinierungsreaktor(en) (3) umfasst, und wobei die tertiäre Luft (6) bis zu den Vorkalzinierungsreaktor(en) geführt wird.

4. Verfahren(1) nach einem der Ansprüche 1 bis 3, wobei ein dritter Tauscher (11) für die Wiedergewinnung von Energie vorgesehen ist, und mindestens teilweise die Rauchgase (8), die den Zyklonvorwärmer (2) verlassen, geführt werden, um mit dem dritten Tauscher (11) zusammenzuarbeiten.

5. Verfahren nach Anspruch 4, wobei die Rauchgase (8) des Zyklonvorwärmers (2) mit dem dritten Tauscher (11) zusammenarbeiten, um ein Fluid eines Fluidkreislaufs zu erwärmen, das dem Fluidkreislauf (12) gemeinsam ist oder nicht, der zwischen dem ersten Tauscher (9) und dem zweiten Tauscher (10) gemeinsam ist.

6. Verfahren nach einem der Ansprüche 1 bis 3, wobei die überschüssige heiße Luft (7) des Klinkerkühlers (4)mit den Rauchgasen (8) des Zyklonvorwärmers (2), vorgelagert von dem ersten Tauscher (9), mischt.

7. Verfahren nach Anspruch 6, wobei mindestens teilweise die Rauchgase (8) des Zyklonvorwärmers (2) für die Trocknung des Rohmaterials zur Produktion von Klinker in einer Einheit (14) verwendet werden, bevor sie mit der überschüssigen Luft (7) des Kühlers gemischt werden.

8. Verfahren nach einem der Ansprüche 1 bis 7, wobei die Temperatur der Verbrennungsluft, d.h. die tertiäre Luft (6), nachgelagert von dem zweiten Tauscher (10) mindestens gleich 650 °C beträgt

9. Anlage zur Herstellung von Zementklinker, insbesondere zur Durchführung des Verfahrens nach Anspruch 1, umfassend:
- einen Drehrohrofen (1),
- einen Zyklonvorwärmer (2), der die Rauchgase des Drehrohrofens aufnimmt,
- einen Klinkerkühler (4) in dem der Klinker durch Beblasen mit Luft abgekühlt wird, vorgesehen auf der Ebene des Ausgangs des Drehrohrofens (1),der heiße Luft erzeugt, wobei ein erster Teil (5) der heißen Luft, die so vom Klinkerkühler (4) erzeugt wird, genannt sekundäre Luft, vom Ofen als Verbrennungsluft verwendet wird,
- eine Leitung (60; 60₁; 60₂), die einen zweiten Teil (6) der heißen Luft, erzeugt durch den Klinkerkühler (4), genannt tertiäre Luft, bis in einen Verbrennungsbereich der Anlage befördert, entweder gemäß einer ersten Alternative, an einen oder an mehrere Vorkalzinierungsreaktor(en) (3) jeweils ausgestattet mit einem oder mit mehreren Brennern, verbunden an den unteren Teil des Zyklonvorwärmers (2), oder gemäß einer zweiten Alternative, an den Brenner des Drehrohrofens (1),
- eine Leitung (70), die einen dritten Teil (7) der heißen Luft, erzeugt durch den Klinkerkühler (4), genannt überschüssige Luft, bis zu einem Tauscher (9) eines Generators zur Produktion von Energie, genannt erster Taucher, befördert,
und in dem die Leitung (60), die die tertiäre Luft (6) befördert, mit einem zweiten Tauscher (10), vorgelagert von dem Verbrennungsbereich, zusammenarbeitet, wobei ein Fluidkreislauf (12) dem ersten Tauscher (9) und dem zweiten Tauscher (10) gemeinsam ist, wobei die Abluft des zweiten Tauschers als Verbrennungsluft entweder für den/die Vorkalzinierungsreaktor(en) (3) gemäß der ersten Alternative oder, gemäß der zweiten Alternative, für den Brenner des Drehrohrofens verwendet wird.

10. Anlage nach Anspruch 9, umfassend den einen oder die mehreren Vorkalzinierungsreaktor(en) (3), wobei die Leitung von tertiärer Luft (6) die Luft bis zu dem/den Vorkalzinierungsreaktor(en) befördert.

11. Anlage nach Anspruch 9 oder 10, wobei der erste Tauscher (9) ein Dampfgenerator ist, der zweite Tauscher (10) ein Dampfüberhitzer ist.

12. Anlage nach einem der Ansprüche 9 bis 11, aufweisend einen dritten Tauscher (11), und wobei mindestens ein Teil der Rauchgase (8), die den Zyklonvorwärmer (2) verlassen, mit dem dritten Tauscher (11) zusammenarbeitet, um Energie zurückzugewinnen.

13. Anlage nach Anspruch 12, wobei ein Fluidkreislauf den dritten Tauscher (11) überquert, wobei der Kreislauf mit dem Fluidkreislauf (12) identisch ist oder nicht, der dem ersten Tauscher (9) und dem zweiten Tauscher (10) gemeinsam ist.

14. Anlage nach einem der Ansprüche 9 bis 11, wobei sich eine Leitung (80) zur Entsorgung der Rauchgase (8) des Zyklonvorwärmers (2)wieder mit der Leitung von überschüssiger Luft (7), vorgelagert vom ersten Tauscher (9), verbindet.

15. Anlage nach Anspruch 14, wobei die Leitung (80) zur Entsorgung der Rauchgase (8) des Zyklonvorwärmers (2) mit einer Einheit (14) zur Trocknung der Rohmaterialien, vorgelagert von der Verbindung mit der Leitung (70) von überschüssiger Luft (7) zusammenarbeitet.

## Claims

1. Method for manufacturing a cement clinker in a facility comprising:
- a rotary furnace (1)
- a cyclone preheater (2) receiving the fumes from said rotary furnace,
- a clinker cooler (4), at the exit from said rotary furnace (1),
- at least one exchanger (9), referred to as first exchanger,
and in which method
- the raw materials are preheated and decarbonated in said cyclone preheater (2)
- the clinker coming out of the furnace is blown air cooled in said clinker cooler (4), generating hot air,
- a first portion (5) of the hot air generated in said clinker cooler, or so-called secondary air, is directed to the rotary furnace (1) to be used as combustion air,
- a second portion (6) of the hot air generated in said clinker cooler, or so-called tertiary air, defined by a temperature at least equal to 750°C and carried separately from the first portion to a place in the facility where fuel is burned to be used as combustion air, either, according to a first alternative, towards one or several precalcination reactor(s) (3) connected to the lower portion of said cyclone preheater (2), each fitted with one or more burner(s), or, according to a second alternative, towards the burner of rotary furnace (1),
- a third portion (7) of hot air generated in said clinker cooler, so-called excess air, is directed and carried in said at least first exchanger (9) for the purpose of recovering power to produce electricity,
- a second exchanger (10) is provided, coacting with the tertiary air (6) in order to heat a receiving fluid from a fluid circuit (12) common to said first exchanger (9) and to said second exchanger (10),wherein second exchanger (10) removes power from the tertiary air, thereby decreasing the temperature of the tertiary air from the upstream to the downstream portion of said second exchanger (10), whereas the tertiary air is used as combustion air downstream of said second exchanger (10), tertiary air downstream said second exchanger (10) being directed either towards said one or several precalcination reactor(s) (3) according to said first alternative, or, towards the burner of rotary furnace (1), according to said second alternative, the heat transmitted by said second exchanger to said receiving fluid corresponding to the heat removed from the tertiary air generated in said clinker cooler.

2. A method according to claim 1, wherein said fluid from the fluid circuit (12) is water in steam or liquid form, said first exchanger (9) being a steam generator, said second exchanger (10) being a steam superheater.

3. A method according to claim 1 or 2, wherein the facility includes the said one or several precalcination reactor(s) (3) and wherein the tertiary air is carried to said precalcination reactor(s).

4. A method according to one of the claims 1 to 3, wherein a third exchanger (11) is provided for recovering power and the fumes (8) coming out of the cyclone preheater (2) are carried at least partially in order to coact with said third exchanger (11).

5. A method according to claim 4, in which the fumes (8) from the cyclone preheater (2) coact with the third exchanger (11) in order to heat a fluid from a fluid circuit common or not to said fluid circuit (12) common between said first exchanger (9) and said second exchanger (10).

6. A method according to one of the claims 1 to 3, wherein the excess hot air (7) from the clinker cooler (4) is mixed with the fumes (8) from the cyclone preheater (2), upstream of said first exchanger (9).

7. A method according to claim 6, in which the fumes (8) from the cyclone preheater (2) is used at least partially for drying the clinker production raw material in a unit (14), before being mixed with the excess air (7) from the cooler.

8. A method according to one of the claims 1 to 7, wherein the temperature of combustion air, namely the tertiary air (6), downstream of said second exchanger (10) is at least equal to 650°C.

9. A facility for the manufacture of cement clinker, suitable for implementing method of claim 1 comprising:
- a rotary furnace (1),
- a cyclone preheater (2) receiving the fumes from said rotary furnace,
- a clinker cooler (4) wherein the clinker is blown-air cooled,provided at the exit of said rotary furnace (1), generating hot air, a first portion (5) of the hot air thus generated by the clinker cooler (4), or called secondary air, being used by the furnace as combustion air,
- a duct (60; 601 ; 60₂) conveying a second portion (6) of the hot air generated by said clinker cooler (4), called tertiary air, up to a combustion zone of the facility, either, according to a first alternative, towards one or several precalcination reactor(s) (3) connected to the lower portion of said cyclone preheater (2), each fitted with one or more burner(s), or, according to a second alternative, towards the burner of rotary furnace (1), tertiary air downstream said second exchanger (10) being used as combustion air either towards said one or several precalcination reactor(s) (3) according to said first alternative, or, towards the burner of rotary furnace (1), according to said second alternative,
a duct (70) conveying a third portion (7) of the hot air generated by said clinker cooler (4), called excess air, up to an exchanger (9) of a power generator, referred to as first exchanger, the duct (60) conveying the tertiary air (6) coacts with a second exchanger (10), upstream of said combustion zone, a fluid circuit (12) being common to said first exchanger (9) and to said second exchanger (10), tertiary air downstream said second exchanger (10) being directed either towards said one or several precalcination reactor(s) (3) according to said first alternative, or, towards the burner of rotary furnace (1), according to said second alternative.

10. A facility according to claim 9, comprising said one or several precalcination reactors (3) the duct for tertiary air (6) conveying the air to said precalcination reactor(s).

11. A facility according to claim 9 or 10, wherein said first exchanger (9) is a steam generator, said second exchanger (10) is a steam superheater.

12. A facility according to any of the claims 9 to 11, including a third exchanger (11) and wherein at least a portion of the fumes (8) coming out of the cyclone preheater (2) coacts with said third exchanger (11) for recovering power.

13. A facility according to claim 12 wherein a fluid circuit runs through said third exchanger (11), said circuit being identical or not with said fluid circuit (12) common to said first exchanger (9) and to said second exchanger (10).

14. A facility according to any of the claims 9 to 11, in which a duct (80) for exhausting the fumes (8) from the cyclone preheater (2) joins the excess air duct (7), upstream of the first exchanger (9).

15. A facility according to claim 14, in which the duct (80) for exhausting the fumes (8) from the cyclone preheater (2) coacts with a unit (14) for drying the raw materials, upstream of the junction with said excess air (7) duct (70).
